# EUROPÄISCHE PATENTSCHRIFT

(11) **EP 1 818 211 B1**
(45) Veröffentlichungstag und Bekanntmachung des Hinweises auf die Patenterteilung: **08.04.2009**
(21) Anmeldenummer: 07002693.5
(22) Anmeldetag: 08.02.2007
(51) Int. Cl.: B60N 2/24, B60N 2/44

(54) **Fahrzeugsitz**
Vehicle seat
Siège de véhicule

(30) Priorität: 10.02.2006 DE 102006006174
(43) Veröffentlichungstag der Anmeldung: 15.08.2007
(73) Patentinhaber: Daimler AG, 70327 Stuttgart (DE)
(72) Erfinder: Gögoluk, Mesut, Basakesehir Istanbul (TR); Öztürk, Ertugrul, Bahçesehir Istanbul (TR)

(56) Entgegenhaltungen:
- DE-C1- 10 220 248
- US-A1- 2004 227 386

## Beschreibung

Die vorliegende Erfindung betrifft einen Fahrzeugsitz, insbesondere einen Fahrzeugsitz für Omnibusse, mit den Merkmalen des Oberbegriffs des Anspruchs 1.

Aus der DE 102 20 248 C1 ist ein Sitz, insbesondere ein Fahrzeugsitz bekannt, mit Sitzkomponenten, wie einem Sitzteil, einer Rückenlehne und einer Beinauflage, die über mindestens eine Betätigungseinrichtung in ihrer Lage, insbesondere in ihrer Neigung zueinander, einstellbar sind, und mit einer Steuereinrichtung mit mindestens einem, vorzugsweise von Hand betätigbaren, Steuerteil. Dadurch, dass die Steuereinrichtung mindestens ein zusätzliches Funktionsteil aufweist, wird sichergestellt, dass diese und/oder das Steuerteil nicht unbeabsichtigt auslösbar sind, sondern erst eine Betätigung des Funktionsteils notwendig ist, um die Steuereinrichtung zu aktivieren. Generell sind bei diesem Fahrzeugsitz die einzelnen oben aufgeführten Sitzkomponenten fest mit einem Tragrahmen verbunden.

Aus der DE 87 08 102.4 U1 ist ein Fahrzeugsitz, insbesondere für Flugzeuge und Omnibusse, bekannt. Dieser weist eine Beinstütze auf, welche zwischen einer Nichtgebrauchsstellung, in der sie in zumindest annähernd vertikaler Lage den Raum unterhalb des Sitzteiles wenigstens unvollständig nach vorne abschließt, und einer Gebrauchsstellung verstellbar ist, in welcher sie sich vom vorderen Rand des Sitzteils aus nach vorne erstreckt. Der bekannte Fahrzeugsitz weist darüber hinaus einen Träger auf, welcher im Bereich seines an den Sitzteil anschließenden Endes um eine in Sitzquerrichtung verlaufende Achse angelenkt ist und zwischen der durch die Anlenkung definierten Schwenkachse und seinem vorderen Ende an von der Schwenklage abhängigen Stellen auf einem Arm wenigstens eines Winkelhebels abgestützt ist, der im Bereich des von seinen beiden Armen gebildeten Knies mittels eines zur Schwenkachse parallelen, aber tiefer als diese angeordneten Schwenklagers am Sitzgestell angelenkt ist. Mit einem anderen, kürzeren Arm des Winkelhebels ist das eine Ende eines Linearverstellelementes schwenkbar verbunden, dessen anderes Ende im Bereich eines hinteren Endes eines Sitzgestells mit diesem ebenfalls schwenkbar verbunden ist. Um einen Platz unterhalb der Sitzfläche anderweitig nutzen zu können, liegt das Linearverstellelement unmittelbar unterhalb des Sitzteils. Dabei ist das Sitzteil fest mit dem Sitzgestell verbunden.

Aus der DE 43 33 108 C1 ist ein Fahrzeugsitz, insbesondere ein Rücksitz für Personenkraftwagen bekannt. Dieser weist ein Sitzkissen, eine Rückenlehne und einen integrierten Kindersitz auf, der einen oberen Polsterabschnitt und einen damit schwenkbeweglich verbundenen unteren Polsterabschnitt umfasst. Darüber hinaus weist er ein zweiteiliges und im unteren Bereich der Rückenlehne um eine horizontale Schwenkachse schwenkbar gehaltenes Lehnenpolsterteil auf, das bei ungenutztem Kindersitz mit miteinander fluchtenden Polsterabschnitten in eine Vertiefung im Lehnenpolster mit diesem bündig einliegt und zur Nutzung des Kindersitzes aus dieser heraus über das Sitzpolster vorstehend ausklappbar ist. Hierbei handelt es sich um eine mechanisch aufwändige Konstruktion, welche insbesondere Kindern einen besseren Halt beziehungsweise ein kindgerechtes Sitzen ermöglichen soll.

Aus der DE 297 20 220 U1 ist eine integrierte, ausklappbare Fußabstützung für Kindersitzkissen in Personenkraftwagen bekannt.

Schließlich ist aus der DE 698 00 184 T2 eine Sitzvorrichtung für ein Flugzeug bekannt, welche einen Sitz, eine vor dem Sitz befindliche vordere Einheit sowie eine seitliche Einheit umfasst, welche sich von einer Seite des Sitzes zur vorderen Einheit erstreckt. Die seitliche Einheit umfasst dabei eine darin befindliche Führung, welche sich im wesentlichen von der vorderen Einheit zum Sitz erstreckt, sowie eine Tischfläche, welche so angeordnet ist, dass sie entlang der Führung zwischen einer Verstauposition innerhalb der vorderen Einheit und einer ausgefahrenen Position außerhalb der vorderen Einheit bewegt werden kann.

Die vorliegende Erfindung beschäftigt sich mit dem Problem, für einen gattungsgemäßen Fahrzeugsitz eine verbesserte Ausführungsform anzugeben, die sich insbesondere leicht und flexibel umrüsten lässt.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem Fahrzeugsitz, insbesondere für einen Omnibus, welcher einen Rahmen sowie eine daran angeordnete Sitzlehne, eine am Rahmen angeordnete Sitzfläche und eine Beinstütze aufweist, die Beinstütze und die Sitzfläche als leicht zusammen vom Rahmen trennbare und dadurch auch leicht austauschbare Einheit auszubilden. Generell ist die Beinstütze zwischen einer Nichtgebrauchsstellung und einer Gebrauchsstellung verstellbar, wobei sie sich in der Nichtgebrauchsstellung in zumindest annähernd vertikaler Lage befindet und sich in der Gebrauchsstellung vom vorderen Rand der Sitzfläche aus nach vorne erstreckt. Die Beinstütze ist um eine in Sitzquerrichtung verlaufende und an einem vorderen Randbereich der Sitzfläche angeordnete Schwenkachse schwenkbar bezüglich der Sitzfläche gelagert und um diese Schwenkachse zwischen ihrer Gebrauchsstellung und ihrer Nichtgebrauchsstellung verstellbar. Durch die erfindungsgemäße Lösung kann die Beinstütze zusammen mit der Sitzfläche einfach vom Rahmen getrennt werden und beispielsweise durch eine normale Sitzfläche ohne Beinstütze ersetzt werden. Hierdurch können der Rahmen und die Sitzlehne für beide Fahrzeugsitzversionen verwendet werden, wodurch die Teilevielfalt und damit die Lager- und Logistikkosten gesenkt werden können. Gleichzeitig ist auch ein nachträgliches Umrüsten von Fahrzeugsitzen ohne Beinstütze zu Fahrzeugsitzen mit Beinstütze problemlos möglich, da hierzu lediglich die Sitzfläche ohne Beinstütze vom Rahmen getrennt werden muss und durch eine Einheit aus Sitzfläche mit daran angeordneter Beinstütze ersetzt werden muss. Von besonderem Vorteil ist darüber hinaus, dass durch den erfindungsgemäßen Fahrzeugsitz eine besonders flexible Ausstattung von Fahrzeugen gegeben ist.

Bei einer vorteilhaften Weiterbildung der erfindungsgemäßen Lösung ist die Sitzfläche zusammen mit der Beinstütze in Sitzquerrichtung verstellbar. Dies bietet den Vorteil, dass die Beinstütze bei einer Querverschiebung der Sitzfläche nicht an ihrer ursprünglichen Stelle verbleibt, d.h. zusammen mit der Sitzfläche verlagert und somit eine komfortable Beinauflage ermöglicht. Insbesondere die Kopplung zwischen Sitzfläche und Beinstütze über die dazwischen angeordnete Schwenkachse garantiert eine gleichbleibende Lage zwischen den beiden Elementen. Durch das Verstellen der Einheit aus Sitzfläche und Beinstütze in Sitzquerrichtung kann insbesondere bei länger andauernden Busreisen eine deutliche Komfortsteigerung erreicht werden, was einen nicht zu unterschätzenden Produktvorteil darstellt.

Bei einer weiteren vorteilhaften Ausführungsform ist die Beinstütze in Sitzquerrichtung sattelförmig ausgebildet. Eine derartige sattelförmige Ausbildung bewirkt eine passive Stabilisierung der auf der Beinstütze aufgelagerten Beine. Bei einem Längsschnitt durch den Fahrzeugsitz weist die nach unten gekrümmte Form der Beinstütze eine ergonomisch angenehme und angepasste Kontur auf, welche es erlaubt, auch längere Zeit die Beine auf der erfindungsgemäßen Beinstütze abzulegen. Durch die bei einem Schnitt in Querrichtung des Fahrzeugsitzes ausgebildete hyperbelartige Mulde an einer Oberseite der sich in der Gebrauchsstellung befindlichen Beinstütze kann erreicht werden, dass die auf der Beinstütze aufgelagerten Beine einen ausreichenden Seitenhalt erfahren und dadurch ein seitliches Abrutschen von der Beinstütze verhindert werden kann.

Zweckmäßig weist die Beinstütze und/oder die Sitzfläche und/oder die Rückenlehne seitlich hervorstehende Wangen auf. Derartige seitlich hervorstehende Wangen unterstützen zusätzlich einen Seitenhalt und ermöglichen dadurch ein komfortables Sitzen auch selbst bei größeren Querbeschleunigungen.

Bei einer weiteren vorteilhaften Ausführungsform ist zur Verstellung der Beinstütze eine Gasfeder vorgesehen, welche einenends an einer Unterseite der Sitzfläche und anderenends an einer Unterseite der Beinstütze schwenkbar gelagert ist. Eine derartige Gasfeder kann beispielsweise mittels eines einfachen Hebels aufgepumpt werden, wodurch sich die Beinstütze auch bei aufgelegten Beinen leicht von deren Nichtgebrauchsstellung in die Gebrauchsstellung verfahren lässt. Die Feder in der Gasfeder bewirkt, dass bei einem Lösen des aufgebrachten Gasdruckes die Beinstütze selbstständig in deren Nichtgebrauchsstellung zurückfährt. Vorzugsweise ist dabei die Bedienung der Gasfeder, das heißt ein Aufpumpen des in der Gasfeder vorhandenen Gasvolumens, mit einem einfachen Handhebel zu bewerkstelligen, welcher darüber hinaus vorzugsweise so an der Sitzfläche angeordnet ist, dass auch eine auf der Sitzfläche sitzende Person ohne aufstehen zu müssen, die Beinstütze von deren Nichtgebrauchsstellung in die Gebrauchsstellung verstellen kann.

Bei einer weiteren vorteilhaften Ausführungsform der erfindungsgemäßen Lösung weist die Beinstütze eine kleinere Breite als die Sitzfläche auf. Dies bietet den großen Vorteil, dass eine auf der Sitzfläche sitzende Person ihre Beine wahlweise auf der in Gebrauchsstellung befindlichen Beinstütze ablegen kann oder seitlich davon mit abgewinkeltem Knie auf dem Boden aufstellen kann. Das heißt ein seitliches Herabnehmen der Beine von der Beinstütze und ein Aufstellen des Fußes auf dem Boden ist problemlos möglich, auch ohne dass hierzu die Beinstütze in deren Nichtgebrauchsstellung zurückverfahren werden muss. Dies steigert insbesondere den Komfort bei längeren Reisen, bei welchen abwechselnde Sitzpositionen als besonders angenehm empfunden werden.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine seitliche Ansicht eines erfindungsgemäßen Fahrzeugsitzes,
- Fig. 2a - 2c: ein Ablaufschema eines Austausches einer Sitzfläche des erfindungsgemäßen Fahrzeugsitzes,
- Fig. 3: eine Ansicht von unten auf die Sitzfläche und eine Beinstütze des Fahrzeugsitzes.

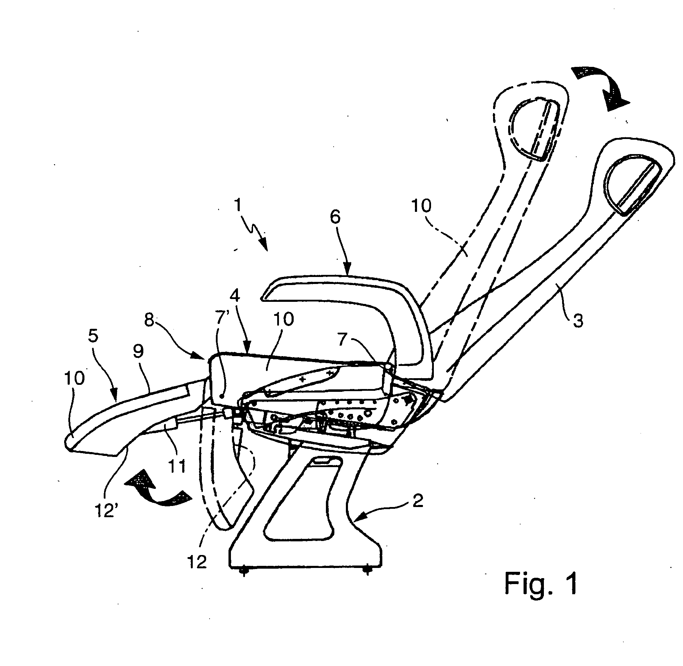

Entsprechend Fig. 1 umfasst ein erfindungsgemäßer Fahrzeugsitz 1 zumindest einen Rahmen 2, an dem eine Sitzlehne 3 und eine Sitzfläche 4 angeordnet sind, und eine Beinstütze 5 sowie zumindest eine seitliche Armlehne 6. Die Sitzlehne 3 ist über eine nicht dargestellte Betätigungseinrichtung in ihrer Neigung gegenüber der im wesentlichen horizontal verlaufenden Sitzfläche 4 schwenkbar um eine Achse 7 angeordnet. Hierdurch lässt sich die Sitzlehne 3 stufenlos in mehrere.Stellungen, angefangen von einer nahezu lotrechten Grundstellung bis hin zu einer stark geneigten Liegestellung verstellen. Die Liegestellung ist dabei in Fig. 1 durchgehend gezeichnet, während eine aufrechte Sitzposition mit unterbrochen gezeichneten Linien dargestellt ist. Generell kann der Fahrzeugsitz 1 als Einzel- oder als Doppelsitz ausgebildet sein, wobei zur seitlichen Begrenzung der Sitzfläche 4 beziehungsweise der Sitzlehne 3 zumindest eine seitliche Armlehne 6 angeordnet sein kann. Diese kann, sofern es sich um einen Doppelsitz handelt, hochklappbar und in einer Ebene der beiden benachbarten Sitzlehnen 3 versenkbar ausgebildet sein.

Die Beinstütze 5 ist zwischen einer Nichtgebrauchsstellung, in der sie sich in zumindest annähernd vertikaler Lage befindet, und einer Gebrauchsstellung verstellbar, in welcher sie sich vom vorderen Rand 8 der Sitzfläche 4 aus nach vorne erstreckt. In Fig. 1 ist dabei die Gebrauchsstellung den Beinstützen 5 mit durchgezogener Linie gezeichnet, wogegen die Nichtgebrauchsstellung mit unterbrochen gezeichneten Linien dargestellt ist. Zur Verstellung der Beinstütze 5 zwischen deren Gebrauchsstellung und Nichtgebrauchsstellung wird diese um eine in Sitzquerrichtung verlaufen und an einem vorderen Rand 8 der Sitzfläche 4 angeordnete Schwenkachse 7' verstellt. Dabei sind die beiden Achsen 7 und 7' im wesentlichen parallel zueinander angeordnet und verlaufen gemäß Fig. 1 senkrecht zur Bildebene.

Um eine besonders bequeme Ablageposition der Beine auf der Beinstütze 5 zu ermöglichen, ist diese in Sitzquerrichtung sattelförmig ausgebildet, das heißt sie verläuft gemäß Fig. 1 in deren Gebrauchsstellung mit einer Auflagekontur 9 gekrümmt nach unten. Die sattelförmige Ausbildung der Beinstütze 5 in Sitzquerrichtung bewirkt darüber hinaus, dass die auf der Beinstütze 5 abgelegten Beine einen Seitenhalt erfahren und gleichzeitig bestrebt sind, eine Ablageposition nahe einer Längsmitte der Beinstütze 5 einzunehmen. Unterstützt werden kann der Seitenhalt der Beine zusätzlich durch seitlich hervorstehende Wangen 10, welche darüber hinaus auch an der Sitzfläche 4 und/oder an der Sitzlehne 3 angeordnet sein können und dadurch der auf dem Fahrzeugsitz 1 sitzenden Person einen verbesserten Seitenhalt verleihen.

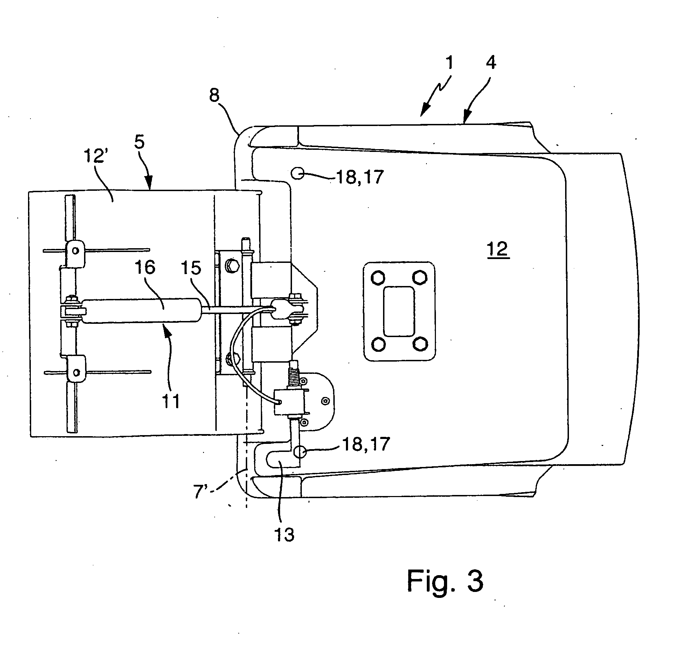

Zur Verstellung der Beinstütze 5 von deren Nichtgebrauchsstellung in die Gebrauchsstellung bzw. umgekehrt ist eine Gasfeder 11 vorgesehen, welche einenends an einer Unterseite 12, vgl. auch Fig. 3 der Sitzfläche 4 und anderenends an einer Unterseite 12' der sich in Gebrauchsstellung befindlichen Beinstütze 5 schwenkbar gelagert ist. Ein Gasvolumen in der Gasfeder 11, kann beispielsweise durch einen Hebel 13, insbesondere einen Einhand-Pumphebel vergrößert werden, was zu einem Ausfahren eines Kolbens 15 der Gasfeder 11 führt und dadurch die Beinstütze 5 nach oben um die Schwenkachse 7' verschwenkt. Ein derartiger Hebel 13 ist vorzugsweise seitlich an der Unterseite 12 der Sitzfläche 4 angeordnet und dadurch leicht auch von auf dem Fahrzeugsitz 1 sitzenden Personen zu erreichen bzw. zu bedienen. Hierdurch ist es auch möglich, dass die Beinstütze 5 von deren Nichtgebrauchsstellung in die Gebrauchsstellung von einer Person verfahren werden kann, welche zum Zeitpunkt des Verfahrens auf dem Fahrzeugsitz 1 sitzt. Zum Verfahren der Beinstütze 5 von deren Gebrauchsstellung in deren Nichtgebrauchsstellung, wird das in der Gasfeder 11 komprimierte Gasvolumen teilweise abgelassen, so dass die in der Gasfeder 11 befindliche Feder ein selbstständiges Verstellen der Beinstütze 5 von der Gebrauchsstellung in die Nichtgebrauchsstellung bewirkt. Die Gasfeder 11 erlaubt dabei ein stufenloses Verstellen der Beinstütze 5, wodurch diese in jeweils gewünschte Lagen verstellt werden kann.

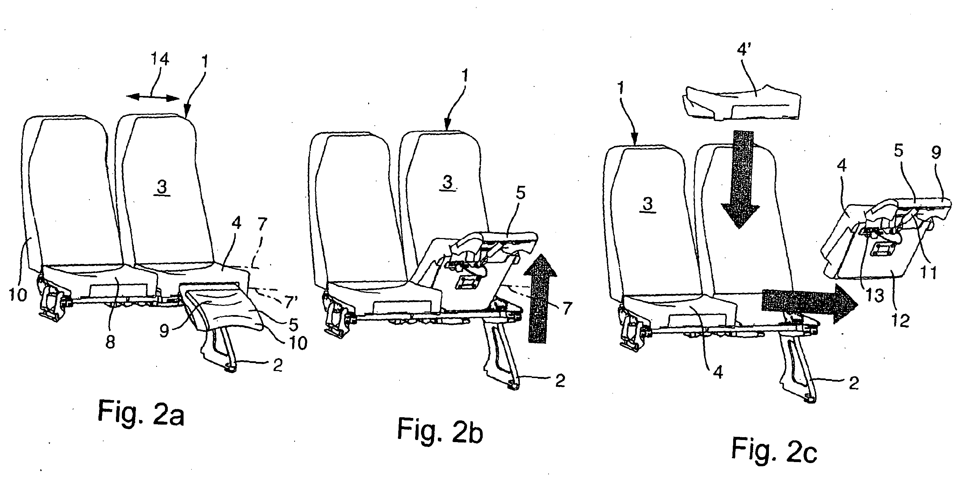

Gemäß den Fig. 2a bis 2c sind als Doppelsitze ausgebildete Fahrzeugsitze 1 dargestellt, welche entlang einer Verschieberichtung 14 relativ zueinander verschiebbar gelagert sind. Dabei erfolgt die Verstellung entlang der Verschieberichtung 14 durch eine Verschiebung der Sitzlehne 3 zusammen mit der Sitzfläche 4 und der Beinstütze 5 bezüglich des Rahmens 2. Eine derartige seitliche Verschiebemöglichkeit bietet den großen Vorteil, dass bei längeren Reisen den Fahrgästen mehr Platz zur Verfügung gestellt werden kann, wodurch der Reisekomfort erhöht wird. Weiter erkennbar ist gemäß Fig. 2a bis 2c, dass die Beinstütze 5 eine kleinere Breite als die Sitzfläche 4 aufweist. Dies bietet den Vorteil, dass insbesondere bei seitlichem verschobenem Fahrzeugsitz 1 ein problemloses Abstellen der Beine auf dem Boden möglich ist, ohne dass hierzu die Beinstütze 5 in deren Nichtgebrauchsstellung zurück verfahren werden müsste.

Erfindungswesentlich beim Fahrzeugsitz 1 ist nun, dass die Beinstütze 5 und die Sitzfläche 4 zusammen eine vom Rahmen 2 leicht trennbare und damit leicht austauschbare Einheit bilden. Ein Trennen bzw. Austauschen der als Einheit ausgebildeten Sitzfläche 4 und Beinstütze 5 vom Rahmen 2 ist gemäß den Fig. 2b und 2c dargestellt. Zum Trennen der Sitzfläche 4 wird diese um die Schwenkachse 7 in Richtung auf die Sitzlehne 3 zu nach oben verschwenkt und kann danach gemäß Fig. 2c einfach vom Rahmen 2 abgenommen werden. Ähnlich einfach erfolgt das Einsetzen einer ausgetauschten Einheit aus Sitzfläche 4 und daran gelagerter Beinstütze 5. Denkbar ist auch, dass der Fahrzeugsitz 1 je nach Anforderungen wahlweise mit der als Einheit aus Sitzfläche 4 und Beinstütze 5 ausgebildeten Sitzkomponente oder einer Sitzfläche 4', welche keine daran gelagerte Beinstütze 5 aufweist, ausgestattet werden kann. Dies bedeutet, dass die Gleichteile Sitzlehne 3 und Rahmen 2 bei mehreren Sitzvarianten des Fahrzeugsitzes 1 verwendet werden können, wobei je nach gewünschter Ausstattung entweder einer Sitzfläche 4' ohne Beinstütze 5 oder eine Sitzfläche 4 mit Beinstütze 5 am Rahmen 2 angeordnet wird. Um die Sitzfläche 4 einfach bezüglich des Rahmens 2 positionieren zu können, können beispielsweise Zapfen 17 bzw. Ausnehmungen 18 an der Unterseite 12 der Sitzfläche 4 vorgesehen sein, welche mit komplementär dazu ausgebildeten Ausnehmungen 18 bzw. Zapfen 17 am Rahmen 2 zusammenwirken.

In Fig. 3 sind die Unterseiten 12' der Beinstütze 5 sowie die Unterseite 12 der Sitzfläche 4 mit zugehörigem Verschwenkmechanismus dargestellt. Dabei ist klar erkennbar, dass sich die Gasfeder 11 auf einer Seite an der Unterseite 12 der Sitzfläche 4 und auf der anderen Seite an der Unterseite 12' der Beinstütze 5 abstützt, bzw. an diesen gelenkig gelagert ist. Wird nun mittels des Hebels 13 das in der Gasfeder 11 vorhandene Gasvolumen vergrößert, so fährt ein Kolben 15 aus einem entsprechenden Zylinder 16 aus, was zu einem Verschwenken der Beinstütze 5 um die Schwenkachse 7' führt. Der Hebel 13, insbesondere ein Einhand-Pumphebel, ist dabei so an der Unterseite 12 seitlich der Beinstütze 5 angeordnet, dass dieser leicht von einer auf dem Fahrzeugsitz 1 sitzenden Person erreicht bzw. betätigt werden kann. Um die Beinstütze 5 von deren Gebrauchsstellung in deren Nichtgebrauchsstellung zurück zu verstellen kann der Hebel 13 in eine andere Richtung betätigt werden, wodurch ein Gasvolumen im Kolben 16 der Gasfeder 11 verringert wird und dadurch ein Zusammenfahren der Gasfeder 11 erreicht wird.

## Patentansprüche

1. Fahrzeugsitz (1), insbesondere für Omnibusse, umfassend zumindest einen Rahmen (2), an dem eine Sitzlehne (3) und eine Sitzfläche (4) angeordnet sind, und eine Beinstütze (5), die zwischen einer Nicht-Gebrauchsstellung, in der sie sich in zumindest annähernd vertikaler Lage befindet, und einer Gebrauchsstellung verstellbar ist, in welcher sie sich vom vorderen Rand (8) der Sitzfläche (4) aus nach vorne erstreckt, wobei die Beinstütze (5) um eine in Sitzquerrichtung verlaufende und an einem vorderen Randbereich (8) der Sitzfläche (4) angeordnete Schwenkachse (7') zwischen der Nicht-Gebrauchsstellung und der Gebrauchsstellung verschwenkbar ist,
**dadurch gekennzeichnet,**
**dass** die Beinstütze (5) und die Sitzfläche (4) eine zusammen vom Rahmen (2) leicht trennbare und damit austauschbare Einheit bilden.

2. Fahrzeugsitz nach Anspruch 1,
**dadurch gekennzeichnet,**
**dass** die Sitzfläche (4) zusammen mit der Beinstütze (5) in Sitzquerrichtung verstellbar ist.

3. Fahrzeugsitz nach Anspruch 1 oder 2,
**dadurch gekennzeichnet,**
**dass** die Beinstütze (5) in Sitzquerrichtung sattelförmig ausgebildet ist.

4. Fahrzeugsitz nach einem der Ansprüche 1 bis 3,
**dadurch gekennzeichnet,**
**dass** die Beinstütze (5) und/oder die Sitzfläche (4) und/oder die Sitzlehne (3) seitlich hervorstehende Wangen (10) aufweist.

5. Fahrzeugsitz nach einem der Ansprüche 1 bis 4,
**dadurch gekennzeichnet,**
**dass** zur Verstellung der Beinstütze (5) eine Gasfeder (11) vorgesehen ist, die einenends an einer Unterseite (12) der Sitzfläche (4) und anderenends an einer Unterseite (12') der Beinstütze (5) schwenkbar gelagert ist.

6. Fahrzeugsitz nach Anspruch 5,
**dadurch gekennzeichnet,**
**dass** die Gasfeder (11) zur Betätigung einen Einhand-Pumphebel (13) aufweist.

7. Fahrzeugsitz nach Anspruch 5 oder 6,
**dadurch gekennzeichnet,**
**dass** die Gasfeder (11) so ausgebildet ist, dass sie ein selbstständiges Verstellen der Beinstütze (5) von deren Gebrauchsstellung in deren Nicht-Gebrauchsstellung ermöglicht.

8. Fahrzeugsitz nach einem der Ansprüche 6 oder 7,
**dadurch gekennzeichnet,**
**dass** die Gasfeder (11) und der Pumphebel (13) eine mit der Beinstütze (5) und der Sitzfläche (4) zusammen austauschbare Einheit bilden.

9. Fahrzeugsitz nach einem der Ansprüche 1 bis 8,
**dadurch gekennzeichnet,**
**dass** die Beinstütze (5) eine kleinere Breite als die Sitzfläche (4) aufweist.

10. Fahrzeugsitz nach einem der Ansprüche 6 bis 9,
**dadurch gekennzeichnet,**
**dass** der Einhand-Pumphebel (13) im Bereich der Schwenkachse (7') seitlich an der Unterseite (12) der Sitzfläche (4) angeordnet ist.

## Claims

1. Vehicle seat (1), in particular for buses, comprising at least one frame (2), on which a seat back (3) and a seat surface (4) are arranged, and a leg rest (5) which can be adjusted between a not-in-use position, in which it is in an at least approximately vertical position, and a use position in which it extends forwards from the front edge (8) of the seat surface (4), wherein the leg rest (5) can be pivoted about a pivot axis (7'), which runs in the transverse direction of the seat and is disposed at a front edge region (8) of the seat surface (4), between the not-in-use position and the use position, **characterized in that** the leg rest (5) and the seat surface (4) form a unit which is easily detachable from the frame (2) in one piece and is therefore exchangeable.

2. Vehicle seat according to Claim 1, **characterized in that** the seat surface (4) can be adjusted together with the leg rest (5) in the transverse direction of the seat.

3. Vehicle seat according to Claim 1 or 2, **characterized in that** the leg rest (5) is of saddle-shaped design in the transverse direction of the seat.

4. Vehicle seat according to one of Claims 1 to 3, **characterized in that** the leg rest (5) and/or the seat surface (4) and/or the seat back (3) have laterally protruding cheeks (10).

5. Vehicle seat according to one of Claims 1 to 4, **characterized in that** a gas-filled spring (11) is provided for the adjustment of the leg rest (5), said gas-filled spring being mounted pivotably at one end on a lower side (12) of the seat surface (4) and at the other end on a lower side (12') of the leg rest (5).

6. Vehicle seat according to Claim 5, **characterized in that**, for actuation, the gas-filled spring (11) has a single-handed pumping lever (13).

7. Vehicle seat according to Claim 5 or 6, **characterized in that** the gas-filled spring (11) is designed in such a manner that it permits automatic adjustment of the leg rest (5) from the use position thereof into the not-in-use position thereof.

8. Vehicle seat according to either of Claim 6 and 7, **characterized in that** the gas-filled spring (11) and the pumping lever (13) form a unit which is exchangeable together with the leg rest (5) and the seat surface (4).

9. Vehicle seat according to one of Claims 1 to 8, **characterized in that** the leg rest (5) has a smaller width than the seat surface (4).

10. Vehicle seat according to one of Claims 6 to 9, **characterized in that,** in the region of the pivot axis (7'), the single-handed pumping lever (13) is arranged laterally on the lower side (12) of the seat surface (4).

## Revendications

1. Siège de véhicule automobile (1), en particulier pour autobus, comprenant au moins un châssis (2), sur lequel sont montés un dossier (3) et une assise de siège (4), et un repose-jambes (5) qui est déplaçable entre une position de non-utilisation dans laquelle il se trouve dans une position au moins approximativement verticale et une position d'utilisation dans laquelle il s'étend vers l'avant à partir du bord avant (8) du siège (4), le repose-jambes (5) pouvant pivoter entre la position de non-utilisation et la position d'utilisation autour d'un axe de pivotement (7') s'étendant dans la direction perpendiculaire du siège et placé sur une zone de bord avant (8) de l'assise de siège (4), **caractérisé en ce que** le repose-jambes (5) et l'assise de siège (4) constituent ensemble une unité facilement séparable du châssis (2) et, donc, interchangeable.

2. Siège de véhicule automobile selon la revendication 1, **caractérisé en ce que** l'assise de siège (4) conjointement avec le repose-jambes (5) est déplaçable dans la direction perpendiculaire du siège.

3. Siège de véhicule automobile selon la revendication 1 ou 2, **caractérisé en ce que** le repose-jambes (5) est conçu en forme de selle dans la direction perpendiculaire du siège.

4. Siège de véhicule automobile selon l'une quelconque des revendications 1 à 3, **caractérisé en ce que** le repose-jambes (5) et/ou l'assise de siège (4) et/ou le dossier (3) comporte des joues (10) faisant saillie latéralement.

5. Siège de véhicule automobile selon l'une quelconque des revendications 1 à 4, **caractérisé en ce que** pour le réglage du repose-jambes (5), il est prévu un ressort à gaz comprimé (11) qui est positionné de manière pivotante, à une extrémité, sur une face inférieure (12) de l'assise de siège (4) et, à l'autre extrémité, sur une face inférieure (12') du repose-jambes (5).

6. Siège de véhicule automobile selon la revendication 5, **caractérisé en ce que** le ressort à gaz comprimé (11) comporte, pour son actionnement, un levier de pompage à une main (13).

7. Siège de véhicule automobile selon la revendication 5 ou 6, **caractérisé en ce que** le ressort à gaz comprimé (11) est conçu de telle manière qu'il permet un réglage autonome du repose-jambes (5) entre la position de non-utilisation et la position d'utilisation.

8. Siège de véhicule automobile selon l'une quelconque des revendications 6 ou 7, **caractérisé en ce que** le ressort à gaz comprimé (11) et le levier de pompage (13) constituent une unité interchangeable avec le repose-jambes (5) et l'assise de siège (4) ensemble.

9. Siège de véhicule automobile selon l'une quelconque des revendications 1 à 8, **caractérisé en ce que** le repose-jambes (5) a une largeur inférieure à celle de l'assise de siège (4).

10. Siège de véhicule automobile selon l'une quelconque des revendications 6 à 9, **caractérisé en ce que** le levier de pompage à une main (13) est monté latéralement sur la face inférieure (12) de l'assise de siège (4) dans la zone de l'axe de pivotement (7').
